# EUROPÄISCHE PATENTSCHRIFT

(11) **EP 1 024 578 B1**
(45) Veröffentlichungstag und Bekanntmachung des Hinweises auf die Patenterteilung: **07.03.2007**
(21) Anmeldenummer: 00101328.3
(22) Anmeldetag: 22.01.2000
(51) Int. Cl.: H02K 1/14, H02K 37/14, H02K 7/06, H02K 5/22

(54) **Magnetvorrichtung mit integraler Befestigung**
Magnet device with integrally formed attachment
Dispositif à aimants avec fixation intégrale

(30) Priorität: 29.01.1999 US 240527
(43) Veröffentlichungstag der Anmeldung: 02.08.2000
(73) Patentinhaber: SIEMENS AKTIENGESELLSCHAFT, 80333 München (DE)
(72) Erfinder: Ineson, David J., Oakville, Connecticut 06779 (US); Childs, David L., Madison, Connecticut 06443 (US); Christiaens, Alois, 1770 Liedekerke (BE)
(74) Vertreter: Kley, Hansjörg

(56) Entgegenhaltungen:
- DE-A- 4 423 313
- US-A- 4 723 754
- US-A- 5 747 897
- PATENT ABSTRACTS OF JAPAN vol. 1997, no. 03, 31. März 1997 (1997-03-31) & JP 08 296758 A (AISAN IND CO LTD), 12. November 1996 (1996-11-12)
- PATENT ABSTRACTS OF JAPAN vol. 012, no. 044 (E-581), 9. Februar 1988 (1988-02-09) & JP 62 193530 A (HONDA MOTOR CO LTD;OTHERS: 01), 25. August 1987 (1987-08-25)
- PATENT ABSTRACTS OF JAPAN vol. 1996, no. 05, 31. Mai 1996 (1996-05-31) & JP 08 021556 A (FUJI KOKI SEISAKUSHO:KK), 23. Januar 1996 (1996-01-23)
- PATENT ABSTRACTS OF JAPAN vol. 1996, no. 05, 31. Mai 1996 (1996-05-31) & JP 08 014018 A (MITSUBISHI MATERIALS CORP), 16. Januar 1996 (1996-01-16)

## Beschreibung

Die vorliegende Erfindung betrifft eine Magnetvorrichtung gemäss dem Oberbegriff des Patentanspruches 1.

Sie betrifft allgemein Vorrichtungen, die magnetische Rückschlüsse einsetzen, wie zum Beispiel Elektromotoren. Insbesondere betrifft die Erfindung Magnetvorrichtungen mit mindestens einem Rückschlußstreifen, der zwischen Polplatten gepreßt ist, um einen Magnetflußweg oder -kreis zu schließen. Gemäß einem anderen Aspekt der Erfindung ermöglicht die Verwendung der Rückschlußstreifen den Verzicht auf ein Metallgehäuse aus einem Eisenwerkstoff zum Schließen des Rückschlusses. Dadurch wird die flexible Ausführung leichter Befestigungssysteme oder integrale Befestigung der Magnetvorrichtungen an Gegenkomponenten in Produktbaugruppen erleichtert.

Magnetvorrichtungen unterschiedlicher Ausführung, wie zum Beispiel viele Arten von Elektromotoren, sind wohlbekannt und werden oftmals zur Linear- oder Drehbetätigung unzähliger Produkte verwendet. Die Motoren verwenden gemeinhin einen magnetischen Rückschluß um ihren Umfang herum, der Eisenwerkstoff beinhaltet.

Viele Motoren, wie zum Beispiel die in der US-PS 5,567,998 gezeigte Ausführung, verwenden ein Motorgehäuse aus Eisenmetall, das Polplatten an ihren radialen Außenrändern berührt, um den Rückschluß zu schließen, während es darüber hinaus als Schutz gegen Verunreinigung durch Umwelteinflüsse dient. In der US-PS 5,243,248 ist eine verbesserte Motorausführung vorgeschlagen worden, die einen durch Verwendung getrennter Wicklungen aus Magnetwerkstoffdraht, die die Erregerwicklungen des Motors umgeben, gebildeten Rückschluß enthält. Noch weitere Motoren sind manuell als übereinandergeschichtete Baugruppe loser Komponenten zusammengebaut worden, wobei Ringe aus Eisenwerkstoff zwischen Polplattenpaaren angeordnet wurden. In solchen Motoren war ein Federelement enthalten, um die übereinandergeschichtete Anordnung in einem äußeren Metallgehäuse zusammenzudrücken und so einen guten Kontakt zwischen Komponenten zu gewährleisten.

Motoren, die radiale Polplatten und ein äußeres Eisenmetallgehäuse für den magnetischen Rückschluß verwenden, sind mit mehreren Nachteilen behaftet. Erstens ist es schwierig, einen fortwährenden Kontakt zwischen den Außenrändern der Polplatten und dem Gehäuse zu erreichen. Das Gehäuse muß die Polplatten aufnehmen oder um sie herum ausgebildet sein. Luftspalte zwischen den Polplatten und dem Gehäuse vermindern den Wirkungsgrad des Rückschlusses und folglich die Leistung des Motors. Aus diesem Grunde muß das Gehäuse zum Minimierung von Luftspalten zwischen der Innenwand des Gehäuses und den Außenrändern der Polplatten zusammengequetscht oder auf andere Weise unter Spannung gebracht werden, um die Polplatten zusammenzuquetschen. Des weiteren ist das Vermögen, einen fortwährenden Kontakt zwischen den Polplatten und dem Gehäuse aufrechtzuerhalten, bei Motoren, die einer Temperaturwechselbeanspruchung ausgesetzt sind, aufgrund des Ausdehnens und Zusammenziehens des Gehäuses gefährdet.

Zweitens wird die Masse des Motors durch einen Rückschluß, der durch ein Eisenmetallgehäuse, das einen Motor in seiner Gesamtheit einschließt, oder durch Magnetdrahtwicklungen um eine Motorperipherie herum, oftmals bedeutend vergrößert. Motoren sind wiederum in der Regel an anderen Komponenten montiert, um Produktbaugruppen zu bilden. Aus diesem Grunde trägt eine größere Motormasse direkt zu einer unerwünschten zusätzlichen Masse des Gesamtproduktes bei.

Drittes hat eine größere Motormasse oftmals nachteilige Nebenwirkungen. Im allgemeinen erfordert ein schwererer Motor ein stärkeres Befestigungssystem, das folglich eine größere Masse aufweist und möglicherweise komplexer ist. Allgemein weisen Motoren mit einem Eisenmetallgehäuse, wie zum Beispiel der in der US-PS 5,567,998 gezeigte, eine Art von Metallbefestigungsflansch auf, um eine Befestigung des Motors an anderen Komponenten einer Produktbaugruppe zu gestatten. Der Metallbefestigungsflansch muß an dem Gehäuse ausgebildet oder daran befestigt sein, und es werden geeignete Befestigungselemente benötigt. Somit könnte die zusätzliche Masse eines Eisenmetallgehäuses indirekt zu einer unerwünschten größeren Masse und Komplexität des Gesamtproduktes beitragen.

In US 4, 7234, 754 ist eine Durchflusssteuerung mit einem Ventil offenbart, wobei das Ventil durch einen Schrittmotor betätigt wird. Um die Grösse des Schrittmotors zu minimieren wird vorgeschlagen, dass nur der Rotor im Gehäuse verbleibt und die Longitudinalbewegung durch ein auf der Welle enthaltendes Gewinde erzeugt wird, wobei sich das Gewinde ausserhalb des magnetischen Rotorgehäuses befindet.

In den PATENT ABSTRACTS OF JAPAN vol. 1997, no. 03 & JP 08 296758 A ist eine Ventilbetätigungsvorrichtung gezeigt, bei dem durch ein geeignetes temperturempfindliches Material gewährleistet wird, dass sich die Ventilspitze bei Temperaturänderungen stets in einer «fail safe» Betriebsposition befindet.

Der gemäss US 5,747,897 offenbarte Schrittmotor weist auf: Eine in einem Krümmer befindliche Statoranordnung, die mindestens ein Paar in einem festen Abstand angeordnete Polplatten aufweist, wobei der magnetische Rückfluss durch einen Rückflussstreifen gebildet wird. Der Krümmer besteht dabei aus einem nichtferromagnetischen Material.

Bei Motoren, bei denen möglicherweise getrennte Magnetwerkstoffdrahtwicklungen verwendet wurden, können solche Wicklungen nicht nur zu einer bedeutenden, unerwünschten Masse des Produktes beitragen, sondern auch eine zusätzliche Komplexität weiterer Wicklungsvorgänge erfordern.

Motoren, bei denen möglicherweise manuell montierte Polplattenstapel mit Rückschlußringen dazwischen verwendet wurden, würden ein zusätzliches Mittel zum Halten der Anordnung in zusammengedrücktem Zustand erfordern, um einen Kontakt zwischen den Flußträgerelementen zu fördern. Dazu sind zwangsweise zusätzliche Komponenten, wie zum Beispiel eine Feder, erforderlich, und es wird eine zusätzliche Konstruktion benötigt, selbst wenn es sich dabei um das Gehäuse selbst handelt, um die Anordnung zusammengedrückt zu halten. Solche Zusätze führen zu einer unerwünscht größeren Masse und Komplexität der Motorausführung.

In Anbetracht der Nachteile und unerwünschten Merkmale, die gemeinhin bei Magnetvorrichtungen, wie zum Beispiel Elektromotorausführungen, gefunden werden, ist es wünschenswert, eine relativ einfache Ausführung vorzusehen, die einen hocheffizienten magnetischen Rückschluß aufweist, der mindestens ein Paar Polplatten enthält, die in einem festen Abstand voneinander angeordnet sind, und daß eine solche Vorrichtung mindestens einen Rückschlußstreifen aufweist, der zwischen jedem Polplattenpaar gepreßt ist, so daß ein fortwährender Kontakt zwischen dem Rückschlußstreifen und den Polplatten gewährleistet ist. Weiterhin ist es wünschenswert, daß der Querschnitt eines solchen Rückschlußstreifens einen bogenförmigen Teil enthält. Des weiteren ist es wünschenswert, auf ein Motoreisengehäuse zu verzichten und den elektrischen Verbinder für den Motor zur integralen Befestigung des Motors an einer Produktbaugruppe auszuführen. Als Alternative dazu ist es wünschenswert, wenn der Motor ein leichtes Kunststoffgehäuse enthält. Weiterhin wäre es von Vorteil, wenn das Motorkunststoffgehäuse zur Befestigung an einer Produktbaugruppe ausgeführt wäre. Die vorliegende Erfindung überwindet Nachteile von Motoren nach dem Stand der Technik, während sie die obenerwähnten, wünschenswerten Merkmale aufweist.

Die anzustrebenden Verbesserungen werden mit einer Magnetvorrichtung gemäss den im Patentanspruch 1 angegebenen Merkmalen erreicht.

Der Zweck und die Vorteile der Erfindung werden in der folgenden Beschreibung und den folgenden Zeichnungen ausgeführt, werden daraus ersichtlich und gehen auch aus der Ausübung der hier offenbarten und beanspruchten Erfindung hervor.

Die vorliegende Erfindung ist allgemein als eine verbesserte Magnetvorrichtung ausgestaltet. Gemäß einem Aspekt der Erfindung umfaßt die Magnetvorrichtung eine Statoranordnung mit einem magnetischen Rückschluß; der mindestens ein Paar Polplatten, die in einem festen Abstand voneinander angeordnet sind, und mindestens einen Rückschlußstreifen, der zwischen jedem Paar voneinander beabstandeter Polplatten gepreßt ist, aufweist. Weiterhin weist die Magnetvorrichtung eine Rotoranordnung mit Dauermagnetwerkstoff auf, die zur Drehung bezüglich der Statoranordnung angeordnet ist.

Gemäß einem weiteren Aspekt der Erfindung ist die Statoranordnung so ausgeführt, daß die Polplatten in den Stator angeformt sind und jeder Rückschlußstreifen zwischen einem Paar der voneinander beabstandeten Polplatten gepreßt und um die Statoranordnung herumgeformt ist.

Gemäß einem weiteren Aspekt der Erfindung enthält der Querschnitt jedes Rückschlußstreifens einen bogenförmigen Teil. Die Breite des Querschnitts jedes Rückschlußstreifens ist vergrößert, wenn der Streifen um die Statoranordnung herumgeformt ist.

Gemäß noch einem weiteren Aspekt der Erfindung umfaßt die Magnetvorrichtung weiterhin einen elektrischen Verbinder mit integralen Befestigungsflanschen, und die Stator- und die Rotoranordnung erstrecken sich bezüglich des elektrischen Verbinders im wesentlichen nach vorne.

Gemäß einem weiteren Aspekt der Erfindung umfaßt die Magnetvorrichtung in Kombination mit einer Gegenkomponente weiterhin einen elektrischen Verbinder mit integralen Befestigungsflanschen zur Befestigung der Stator- und der Rotoranordnung in einer Bohrung der Gegenkomponente.

Gemäß noch einem weiteren Aspekt der Erfindung weist die Magnetvorrichtung ein eisenfreies Gehäuse auf, das im wesentlichen um die Stator- und die Rotoranordnung herum angeordnet ist, und enthält eine Dichtung, die mit dem elektrischen Verbinder und dem Gehäuse in Eingriff steht.

Bei der Beschreibung der bevorzugten Ausführungsformen wird auf die beigefügten Zeichnungen Bezug genommen, in denen gleiche Teile gleiche Bezugszahlen aufweisen. Es zeigt:
- Figur 1: eine Längsschnittansicht einer Ausführungsform eines Elektromotors, der Rückschlußstreifen und einen elektrischen Verbinder mit integralen Befestigungsflanschen zur Befestigung des Motors in einer Bohrung einer Gegenkomponente enthält;
- Figur 2: eine perspektivische Explosionsdarstellung von vorne des in Figur 1 gezeigten Elektromotors;
- Figur 3c: eine Längsschnittansicht der Stator- und der Rotoranordnung nach den Figuren 1 und 2 mit einem installierten Rückschlußstreifen, wobei die Figuren 3a und 3b Vergrößerungen eines in Figur 3c gezeigten eingekreisten Bereichs bereitstellen, um Schnittansichten zweier weiterer Rückschlußstreifenkonfigurationen darzustellen;
- Figur 4: eine Draufsicht des in den Figuren 1 und 2 gezeigten Elektromotors;
- Figur 5: eine perspektivische Hinteransicht des in den Figuren 1, 2 und 4 gezeigten Elektromotors;
- Figur 6: eine Längsschnittansicht einer Ausführungsform eines Elektromotors mit Rückschlußstreifen, einem flanschlosen elektrischen Verbinder und einem Motorgehäuse aus Kunststoff zur Befestigung eines Teils des Motors in einer Bohrung einer Gegenkomponente;
- Figur 7: eine perspektivische Explosionsdarstellung von vorne des in Figur 6 gezeigten Elektromotors.

Es versteht sich, daß die Zeichnungen nicht maßstäblich sind. Des weiteren ist die vorliegende Erfindung, wie unten erläutert, natürlich nicht auf die dargestellten bevorzugten Ausführungsformen beschränkt.

Vor Bezugnahme auf die bevorzugten Ausführungsformen sollte darauf hingewiesen werden, daß die vorliegende Erfindung viele Formen in einer Vielzahl von Vorrichtungen, die einen magnetischen Rückschluß einsetzen, annehmen kann. Der Veranschaulichung halber wird die Erfindung in der folgenden Erörterung durchweg als in einer bestimmten Magnetvorrichtung aufgenommen beschrieben, die in einer speziellen Produktbaugruppe, nämlich einem Elektromotor 10 in Form eines Schrittmotors, der eine Linearbetätigung einer Leerlaufluftregelventilanordnung bereitstellt, verwendet wird. Die Erfindung ist jedoch genauso auf andere Magnetvorrichtungen, die einen Rückschluß einsetzen, anwendbar.

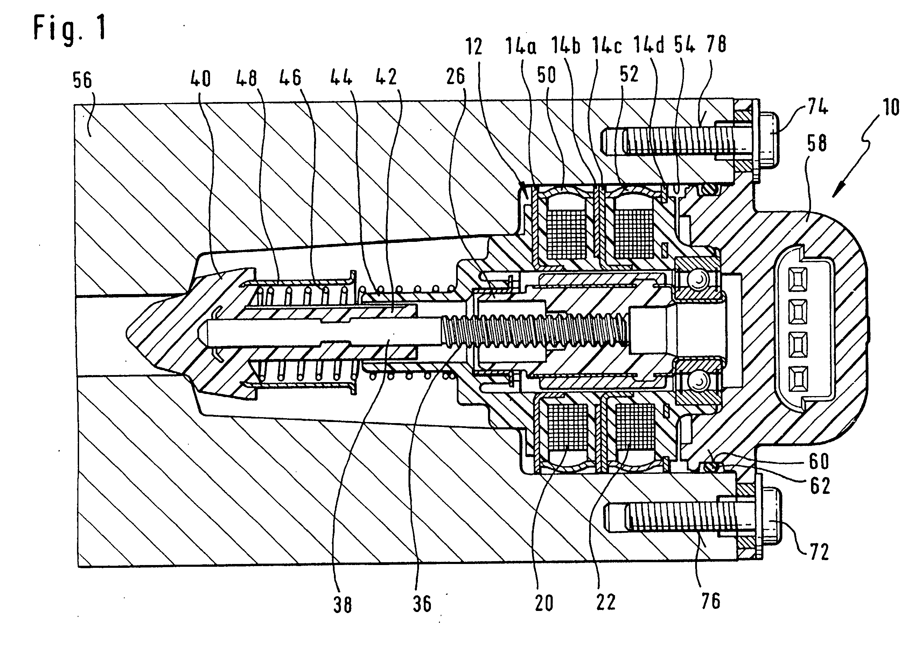

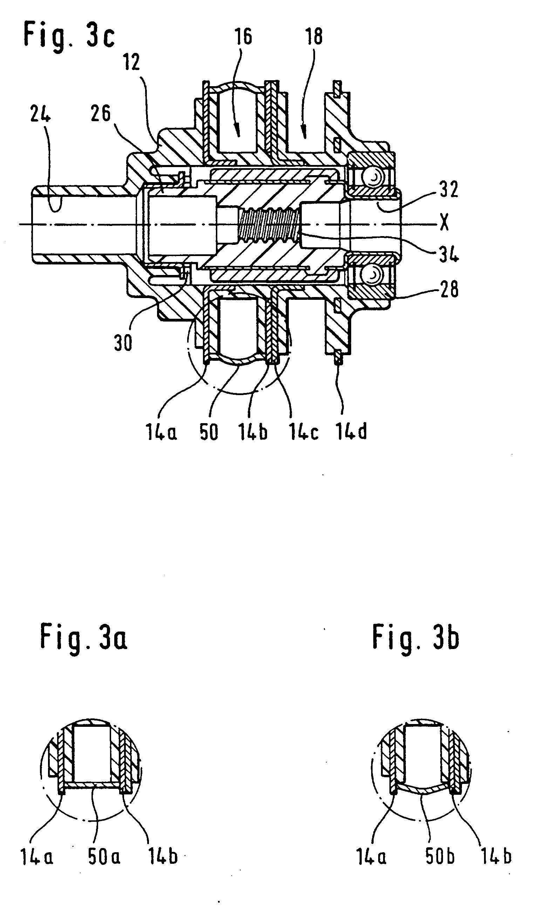

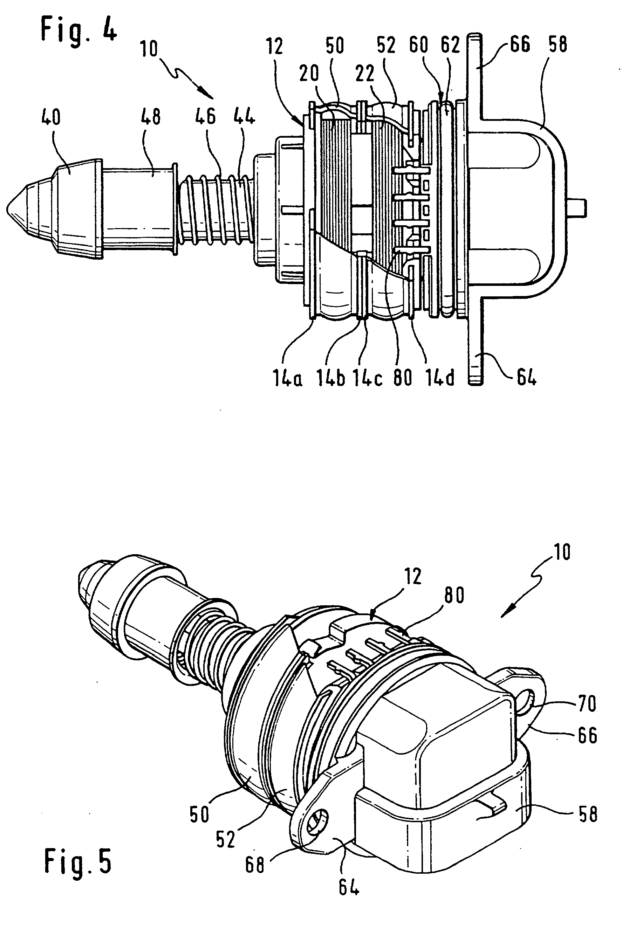

Im folgenden auf die Zeichnungen und die Figuren 1 - 5 Bezug nehmend, enthält der Motor 10 eine einstückig geformte Statoranordnung 12. Wie am besten in Figur 3c zu sehen, wird die Statoranordnung 12 durch Spritzgießen eines Kunststoffmaterials, wie zum Beispiel Polybutylenterephthalat oder eines anderen geeigneten Materials, um mehrere Polplatten 14a, 14b, 14c und 14d herum hergestellt. Die Statoranordnung 12 könnte auch auf andere Weise, zum Beispiel durch Verwendung von Befestigungselementen oder Abbindemassen, zum Festhalten der Polplatten ausgeführt sein. Die Polplatten 14a bis 14d sind in der Regel aus kohlenstoffarmem Stahl, wie zum Beispiel AISI 1008- oder 1010-Stahl oder einem anderen geeigneten Eisenwerkstoff, hergestellt und sind in Paaren angeordnet. Bei dieser Ausführungsform sind die Polplatten 14a bis 14d in benachbarten, voneinander beabstandeten Paaren, 14a-14b und 14c-14d, angeformt, und wie am besten in den Figuren 4 und 5 zu sehen, sind die Polplatten an ihrem radialen Rand nicht ganz rund. Die Statoranordnung 12 enthält Vertiefungen 16, 18 in dem Kunststoff, die sich zwischen den jeweiligen Polplattenpaaren 14a-14b und 14c-14d befinden. Die Vertiefungen 16, 18 nehmen jeweilige Drahtspulen 20, 22 aus isoliertem Kupferdraht oder einem anderen geeigneten Material auf, wie in den Figuren 1 und 4 dargestellt.

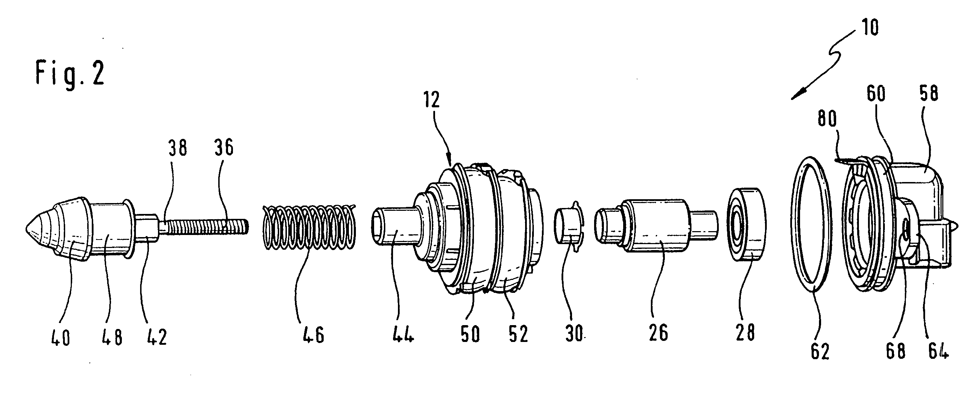

Erneut auf Figur 3c Bezug nehmend, weist die Statoranordnung 12 einen dadurch hindurchführenden Durchgang 24 zur Aufnahme einer Rotoranordnung 26 auf. Die Rotoranordnung 26 der bevorzugten Ausführungsform ist aus einem geeigneten Material wie zum Beispiel einem Polyphenylensulfid (PPS) als Kunststoffbindemittel mit Dauermagneten aus einem Werkstoff wie zum Beispiel Neodym-Eisen-Bor, Ferrit oder anderen geeigneten Magnetwerkstoffen, die in der Technik bekannt sind, hergestellt. Die Statoranordnung 12 ist zur Aufnahme eines hinteren Rotorlagers 28 und eines vorderen Rotorlagers 30 derartig konfiguriert so daß die Rotoranordnung 26 abgestützt wird und ihre Drehung bezüglich der Statoranordnung 12 und um eine mittlere Achse X herum gestattet wird. Bei dieser Ausführungsform des Motors 10 als Schrittmotor wird durch Einleitung eines Stroms in die (in den Figuren 1 und 4 gezeigten) Spulenwicklungen 20, 22 der Statoranordnung 12 eine Drehbewegung der Rotoranordnung 26 bewirkt. Die Rotoranordnung 26 weist einen dadurch hindurchführenden Durchgang 32 mit einem Gewindeteil 34 zum Eingriff mit dem Gewindeteil 36 der in den Figuren 1 und 2 gezeigten Welle 38 auf. Deshalb wird die Drehbewegung der Rotoranordnung 26 in eine Linearbewegung der Welle 38 umgewandelt, wodurch der Schrittmotor zu einem Linearstellglied wird. Für Fachleute versteht sich, daß die vorliegende Erfindung in verschiedenen alternativen Ausführungsformen der Magnetvorrichtungen verwendet werden könnte, und zwar unabhängig davon, ob es sich bei solchen alternativen Ausführungsformen um Ein- oder Mehrphasenausführungen handelt. Des weiteren könnten solche alternativen Ausführungsformen so ausgelegt sein, daß sie als Reaktion auf eine elektrische Eingabe eine andere Ausgabe liefern, wie zum Beispiel bei einem Drehschrittmotor oder bei einem Motor, der eine kontinuierliche Drehbewegung oder dergleichen bereitstellt.

Bei der Ausführungsform eines in einem Leerlaufluftregelventil verwendeten Motors 10, wie in den Figuren 1 und 2 dargestellt, weist die Welle 38 an ihrem distalen Ende einen integral angeformten Zapfen 40 auf. Der Zapfen 40 weist einen Hülsenteil 42 auf, der in dem distalen Ende 44 der Statoranordnung 12 aufgenommen wird. Eine Feder 46 ist um das distale Ende der Statoranordnung 12 und den Hülsenteil 42 des Zapfens 40 herum angeordnet. Die Feder 46 neigt zur Vorspannung des Zapfens 40 in einer ausgestreckten Position. Der Zapfen 40 nimmt einen zylindrischen Schmutzschutz 48 auf, der vor Verunreinigung des Motors 10 schützen soll.

In Verbindung mit den obenerwähnten Strukturen der beispielhaften Ausführungsform einer Magnetvorrichtung, stellen die Figuren 1 - 5 mehrere neuartige und nicht offensichtliche Fortschritte gegenüber dem Stand der Technik dar. Gemäß einem ersten Aspekt der Erfindung setzt die vorliegende Erfindung, wie am besten in den Figuren 1 und 2 zu sehen, eigens vorgesehene Rückschlußstreifen 50, 52 ein, die anfangs relativ flach über ihre Länge sind und in der Regel aus kohlenstoffarmem Stahl, wie zum Beispiel AISI 1008 oder 1010, oder einem anderen geeigneten Eisenwerkstoff hergestellt, gesenkgeschmiedet und geschnitten sind. Die Rückschlußstreifen 50, 52 sind zwischen den jeweiligen Paaren feststehender Polplatten 14a-14b und 14c-14d in der Statoranordnung 12 angeordnet. Jeder Rückschlußstreifen 50, 52 wird dann zu einer zylindrischen Gestalt geformt, die einen wesentlichen Teil der Statoranordnung 12 umgibt, wie am besten in Figur 4 zu sehen, und den Streifen durch Preßpassung festhält. Dieser Vorgang wird durch eine von Philips Manufacturing Technology Center, in South Plainfield, New Jersey, hergestellte Maschine ausgeführt. Die Maschine ordnet die Statoranordnung 12 über das Paar von Rückschlußstreifen 50, 52 derart an, daß jedes der jeweiligen Polplattenpaare einen der Rückschlußstreifen überspreizt. Dann wird die Statoranordnung 12 gedreht, während die Rückschlußstreifen 50, 52 durch Formräder zwischen den jeweiligen Polplattenpaaren 14a-14b und 14c-14d gezwängt werden. Die entstehende Preßpassung, die sich durch diese Ausführung ergibt, ermöglicht den Verzicht auf zusätzliche Preßglieder zum Festhalten der Polplatten 14a-14d und Rückschlußstreifen 50, 52.

Die Verwendung einer Preßpassung gestattet viele Querschnittsformen der Rückschlußstreifen 50, 52, die zur Vervollständigung der Statoranordnung 12 verwendet werden. Wie in Figur 3a gezeigt, könnte ein Rückschlußstreifen 50a beispielsweise einen flachen (planaren) Querschnitt aufweisen. Ein flacher Streifenquerschnitt erfordert die Einhaltung enger Toleranzen von den Rückschlußstreifen und den Komponenten der Statoranordnung 12, um eine dauerhaft akzeptable Preßpassung der Rückschlußstreifen zwischen den Polplatten zu erzielen.

Als weiteres Beispiel akzeptabler Rückschlußstreifenquerschnittsformen zeigt Figur 3b einen Rückschlußstreifen 50b mit einem bogenförmigen Querschnitt. Ein Rückschlußstreifen, der über seine Länge relativ flach ist und einen Querschnitt aufweist, der bogenförmig ist oder auf andere Weise nicht in der gleichen Ebene liegt, neigt dazu, daß sein Querschnitt während der Anordnung zwischen den Polplatten abgeflacht und verbreitert und zu einer zylindrischen Form um die Statoranordnung 12 herum geformt wird. Aus diesem Grunde ist ein Rückschlußstreifen mit einem nichtplanaren Querschnitt, wie zum Beispiel dem bogenförmigen Querschnitt des Streifens 50b, anfangs schmaler als ein vergleichbarer Streifen mit einem flachen (planaren) Querschnitt, wie zum Beispiel der Streifen 50a, und gestattet freiere Toleranzen beim Erzielen der Preßpassung, da er sich verbreitert, während er zu seiner zylindrischen Endform geformt und zwischen die Polplatten gepreßt wird. Wie in Figur 3b durch Vergleich mit dem flachen Querschnitt von Figur 3a gezeigt, führen jedoch einige nichtplanare Querschnittsformen, wie zum Beispiel der einfache bogenförmige Querschnitt des Streifens 50b, zu einer Verminderung des potentiellen Berührungsbereichs zwischen den Rändern des Rückschlußstreifens und den flachen, gegenüberliegenden Flächen der Polplatten.

Obgleich Rückschlußstreifen mit flachem oder einfachem, nichtplanarem Querschnitt den Verzicht auf getrennte Kompressionselemente zum Festhalten der Polplatten und Rückschlußstreifen ermöglichen, werden die Rückschlußstreifen 50, 52 nach den Figuren 1 und 2 bevorzugt, da sie die besten Merkmale sowohl der flachen als auch der nichtplanaren Streifen vereinen. Wie in Figur 3c gezeigt, weist der Rückschlußstreifen 50 einen Querschnitt mit einem mittleren, bogenförmigen Teil auf, der von einem flachen Schenkelteil entlang jedem Rand flankiert wird. Wie dies auch bei dem Rückschlußstreifen 50b nach Figur 3b der Fall ist, neigt der bogenförmige Teil des Rückschlußstreifens 50 dazu, abgeflacht und verbreitert zu werden, wenn er zur Entsprechung der zylindrischen Konfiguration der Statoranordnung 12 gebogen wird. Die bogenförmigen Teile in den Streifen 50 und 50b gestatten auch das Ausüben einer zusätzlichen Kraft zur Vergrößerung der Breite jedes Streifens über die erreichte hinaus, indem der Streifen einfach zu einer zylindrischen Form gebogen wird. Für Fachleute ist offensichtlich, daß die Verbreiterung des Rückschlußstreifens durch Formen um die Statoranordnung 12 herum oder durch Ausüben einer zusätzlichen Druckkraft auf den Streifen mit einer Vielzahl von nichtplanaren Streifenquerschnittsformen erreicht werden kann. Die mögliche Verbreiterung von Rückschlußstreifen beim Einsetzen gestattet weitere Toleranzen bei der Herstellung der Statoranordnung und ihrer Komponenten, wie zum Beispiel bei der Rückschlußstreifenbreite, der Polplattendicke und der Positionierung. Die Ausführung des Rückschlußstreifens 50, die auch als Streifen 50, 52 der Figuren 1 und 2 zu sehen ist, umfaßt den zusätzlichen Vorteil der flachen, äußeren Schenkelteile, die beim Einsetzen in die Statoranordnung mit ihren Außenrändern parallel zu den flachen, gegenüberliegenden Flächen der Polplatten positioniert sind. Dadurch, daß der flache Rand der flachen Fläche entspricht, werden Luftspalte zwischen den Rückschlußkomponenten auf ein Minimum reduziert. Eine Reduzierung der Luftspalte zwischen zusammengehörigen Teilen eines magnetischen Rückschlusses führt allgemein zu einer Vorrichtung mit besserer Leistung, das heißt einer höheren Ausgangsleistung bei einer gegebenen Eingangsleistung.

Die Ausführung der Statoranordnung 12 mit in Preßpassung angebrachten Rückschlußstreifen bietet zahlreiche Vorteile. Erstens, wie bei der beispielhaften Schrittmotorausführungsform zu sehen, stellt sie eine einfache, kostengünstige, aber hocheffiziente Art der Verbesserung der Motorleistung dar, indem ein direkterer Rückschluß geschaffen wird, wobei potentielle Luftspalte zwischen den Komponenten, die den Magnetfluß übertragen, reduziert werden. Zweitens bieten bestimmte Rückschlußstreifenkonfigurationen, die einen Querschnitt mit mindestens einem gewissen nichtplanaren Teil, wie zum Beispiel die bogenförmigen Teile, die bei den Streifen 50 und 50b zu sehen sind, haben, das vorteilhafte Breitenvergrößerungsmerkmal, wenn sie der Konfiguration der Statoranordnung angepaßt werden. Dieses zusätzliche Merkmal gestattet größere Maßtoleranzen und verringert wiederum Ausschuß und damit verbundene Kosten bei der Herstellung solcher Motoren. Drittens ermöglicht ein Motor nach der vorliegenden Erfindung den Verzicht auf die Rückschlußfunktion eines Motorgehäuses aus Eisenmetall. Dadurch wird eine verbesserte Motorleistung durch Reduzierung von Luftspalten zwischen den Elementen des Rückschlusses unter wesentlicher Verminderung der Gesamtproduktmasse bereitgestellt.

Gemäß einem weiteren Aspekt der Erfindung wird durch den magnetischen Rückschluß unter Einsatz von Rückschlußstreifen eine größere Flexibilität hinsichtlich der Produktausführung erleichtert. Der Verzicht auf das Motorgehäuse aus Eisenmetall gestattet vollintegrierte Produktausführungen, wie zum Beispiel die Befestigung der Stator- und der Rotoranordnung in einer Bohrung einer Gegenkomponente. Bei dem Beispiel des in den Figuren 1, 2, 4 und 5 gezeigten Leerlaufluftregelventils kann der Motor 10 in einer Bohrung 54 eines Einlaßkrümmers oder Drosselklappenstutzens 56 angebracht sein, wie in Figur 1 gezeigt. In Anbetracht des durch die Rückschlußstreifen 50, 52 bereitgestellten direkten magnetischen Rückschlusses kann der Krümmer 56 aus praktisch jedem beliebigen wünschenswerten Material, wie zum Beispiel Kunststoff, Aluminium oder Stahl, hergestellt sein. Der Motor 10 und der Krümmer 56, die integral verbunden sind, sind bei der beispielhaften Ausführungsform durch Verwendung eines einen Kunststoffkörper aufweisenden elektrischen Verbinders 58 mit einer Nut 60, die eine O-Ring-Dichtung 62 zum abdichtenden Eingriff mit der Bohrung 54 des Krümmers 56 aufnimmt, zusammengefügt. Wie am besten in Figur 5 zu sehen, weist der elektrische Verbinder 58 integrale Befestigungsflansche 64, 66 mit Durchgangslöchern 68 bzw. 70 auf. Der Krümmer 56 kann zur Kombination mit Befestigungselementen aus praktisch jedem beliebigen Material und beliebiger Ausführung hergestellt sein. Die in den Figuren 1, 2, 4 und 5 gezeigte Ausführungsform enthält beispielhaft Schrauben 72, 74, die durch die Löcher 68, 70 im elektrischen Verbinder 58 hindurchführen und in Befestigungslöchern 76, 78 im Krümmer 56 aufgenommen werden. Die in den Figuren 2,4 und 5 gezeigten elektrischen Leitungen 80 sind auf herkömmliche Weise mit den Spulenwicklungen 20, 22 verbunden und in dem Bereich der Statoranordnung 12 untergebracht, der dadurch geschaffen wird, daß die Rückschlußstreifen 50, 52 und die Polplatten 14a-14d nicht ganz rund sind.

Für Fachleute versteht sich, daß der elektrische Verbinder und die Bohrung der Gegenkomponente nicht zylindrisch sein müssen. Noch muß die Dichtung eine O-Ring-Dichtung oder von gebräuchlicher Ausführung sein. Ebenso versteht sich, daß der abgedichtete gegenseitige Eingriff zwischen einer nach innen weisenden Fläche des elektrischen Verbinders und einer nach außen weisenden Fläche der Gegenkomponente konfiguriert sein könnte. Des weiteren könnte der gegenseitige Eingriff zwischen anderen Flächen, wie zum Beispiel der Fläche, die die Seite der integralen Befestigungsflansche umfaßt, und der gegenüberliegenden Fläche auf der Seite der Gegenkomponente, konfiguriert sein.

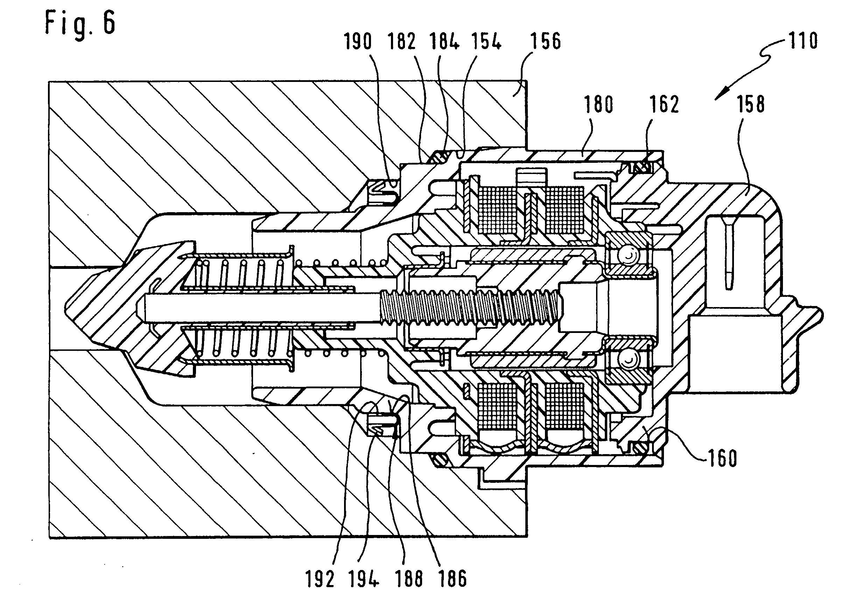

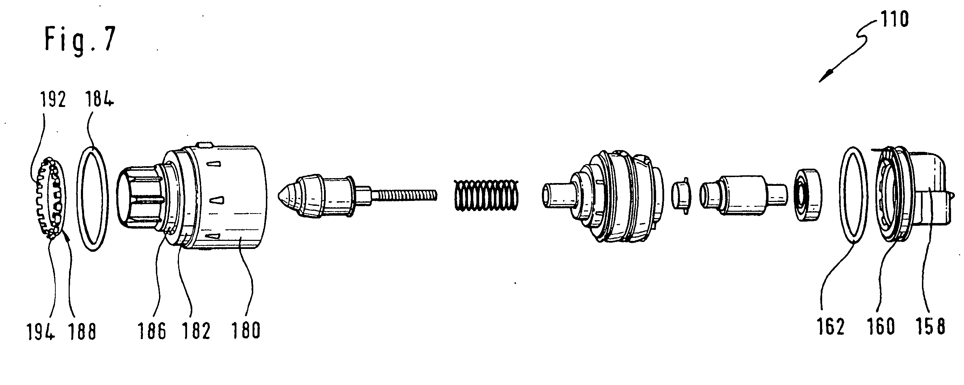

Die Figuren 6 und 7 zeigen eine alternative Ausführungsform eines Motors 110, der Vorteile der vorliegenden Erfindung einsetzt. Die inneren Baugruppen des Motors 110 entsprechen denen des Motors 10 nach den vorherigen Figuren. Der Motor 110 unterscheidet sich von dem Motor 10 am deutlichsten hinsichtlich der mit dem Gehäuse und der Befestigung des Motors verbundenen Strukturen. Der Motor 110 weist einen herkömmlichen, flanschlosen elektrischen Verbinder 158 mit Kunststoffkörper auf. Der Verbinder 158 weist eine Nut 160 auf, die eine O-Ring-Dichtung 162 zum abdichtenden Eingriff mit der Innenwand eines Motorschutzgehäuses 180 aufweist. Durch Verwendung eines magnetischen Rückschlusses, der die obenerwähnten Rückschlußstreifen und festgelegten Polplatten enthält, wird gestattet, daß das Motorgehäuse 180 der vorliegenden Ausführungsform vorzugsweise aus geformtem Kunststoff, oder als Alternative dazu aus einem anderen geeigneten, metallischen oder nichtmetallischen Material ausgeführt wird. Wie oben unter Bezugnahme auf die erste Ausführungsform erwähnt, können der elektrische Verbinder und das Gehäuse unterschiedlicher Form, Konfiguration und Ausführung sein und verschiedene Arten von Dichtungen zwischen verschiedenen Flächen der Komponenten aufnehmen.

Bei der in den Figuren 6 und 7 gezeigten zweiten Ausführungsform weist das Motorgehäuse 180 einen Absatz 182 auf, an dem eine O-Ring-Dichtung 184 zum abdichtenden Eingriff mit einer Bohrung 154 des Krümmers 156 ruht. Wie bei dem abdichtenden Eingriff zwischen dem elektrischen Verbinder und der Bohrung der Gegenkomponente bei der ersten beispielhaften Ausführungsform, können das Gehäuse, die Gegenkomponente und die Dichtung dazwischen verschiedene Formen, Konfigurationen und Ausführungen aufweisen, um einen abdichtenden Eingriff zwischen einer Fläche des Gehäuses und einer Fläche der Gegenkomponente bereitzustellen. Bei der zweiten beispielhaften Ausführungsform weist das Gehäuse 180 auch einen zweiten Absatz 186 auf, der einen Halter 188 zum Halteeingriff mit einer zweiten Bohrung 190 des Krümmers 156 aufnimmt. Der Halter 188 weist nach innen weisende Federnasen 192 auf, aufgrund derer er von selbst festgehalten wird, wenn er auf den Absatz 186 des Gehäuses 180 gepreßt wird. Der am Motorgehäuse 180 installierte Halter 188 weist des weiteren nach außen weisende Federnasen 194 auf, aufgrund derer er von selbst festgehalten wird, wenn das Motorgehäuse 180 in die Bohrung 190 des Krümmers 156 gepreßt wird. Aufgrund der selbstfesthaltenden Federwirkung der Nasen 192, 194 wird der Halter 188 vorzugsweise aus einem geeigneten Material, wie zum Beispiel Federstahl, hergestellt. Die Ausführung des in den Figuren 6 und 7 gezeigten Halters 188 bietet insofern einen zusätzlichen Vorteil, als das Zusammendrücken des Halters 188 bei Einsetzen in die Bohrung 190 bewirkt, daß sowohl bei den nach innen weisenden Nasen 192 als auch bei den nach außen weisenden Nasen 194 deren Haltekraft an dem jeweiligen Gehäuse 180 und der jeweiligen Gegenkomponente, dem Krümmer 156, vergrößert wird. Wie bei den vorherigen Eingriffen zwischen Komponenten ist für Fachleute offensichtlich, daß verschiedene Formen, Konfigurationen und Ausführungen verwendet werden könnten, um den verriegelten Eingriff zwischen einem Motorgehäuse und einer Gegenkomponente bereitzustellen.

Die Ausführung der Motoren 10 und 110 ohne ein Motorgehäuse aus Eisenmetall und mit integralen Befestigungskonstruktionen bietet weitere zahlreiche Vorteile. Erstens stellen die integralen Befestigungsmethoden kostengünstige, leichtere Befestigungssysteme bereit. In den Figuren 1, 2, 4 und 5 wird durch direkte Montage des Motors 10 an dem Krümmer 56 über integrale Flansche 64, 66 am elektrischen Verbinder 58 eine Abdichtung des Verbinders 58 und des Motors 10 gegen den Krümmer 56 mit einer einzigen Dichtung 62 erreicht. Bei einer solchen Befestigungskonfiguration liegt nur der Verbinder 58 über der Befestigungsfläche des Krümmers 56 frei. Dadurch wird der Motor nur minimal Umwelteinflüssen ausgesetzt, die Ausführung und Herstellung erleichtert und die Anzahl von zum Befestigen und Schützen des Motors erforderlichen Teilen vermindert. Zweitens wird durch Befestigen des Motors 10 in der Bohrung 54 des Krümmers 56 die Masse des Motors auf ein Minimum reduziert, während der Schwerpunkt des Motors näher am Schwerpunkt der Konstruktion, an dem er angebracht ist, liegt. Der leichtere Motor mit einem dichter zusammenliegenden Schwerpunkt verbessert die Vibrationswiderstandsfähigheit der Motoranordnung. Dies gestattet weiterhin kleinere, leichtere Befestigungskomponenten, wie zum Beispiel bei den integralen Kunststoffbefestigungsflanschen 64, 66 und den Befestigungselementen 72, 74. Drittens, wie insbesondere beim Motor 110 nach den Figuren 6 und 7 zu sehen, gestattet die verminderte Produktmasse mit einem Nichteisenmotorgehäuse 180 die Befestigung ohne zusätzliche herkömmliche Metallgehäuseflansche und Befestigungselemente, wodurch die Gesamtproduktmasse im Vergleich zu einem Motor mit einem Motorgehäuse aus Eisen vermindert wird. Dies gestattet wiederum eine größere Flexibilität bei der Ausführung von einstückigen Befestigungssystemen.

Obgleich die Verwendung der vorliegenden Erfindung zur Erläuterung in einem bipolaren Schrittmotor, der eine lineare Betätigung in einem Leerlaufluftregelventil bereitstellt, gezeigt wurde, ist für Fachleute offensichtlich, daß die Aspekte der Erfindung in den verschiedensten vorteilhaften Ausführungen von Magnetvorrichtungen ausgestaltet werden können. Des weiteren versteht sich, daß die verschiedensten Dichtungen und Befestigungsmechanismen, Abmessungen und geeigneten Ausführungsmaterialien zur Erfüllung der besonderen Erfordernisse und Anforderungen des Endverbrauchers verwendet werden können.

### Liste der verwendeten Bezugszeichen

- 10: Motor
- 12: Statoranordnung
- 14a, 14b; 14c, 14d: Polplattenpaar, Polplatte
- 16: Vertiefung
- 18: Vertiefung
- 20: Drahtspule, Spulenwicklung
- 22: Drahtspule, Spulenwicklung
- 24: Durchgang
- 26: Rotoranordnung
- 28: Rotorlager, hinteres
- 30: Rotorlager, vorderes
- 32: Durchgang
- 34: Gewindeteil
- 36: Gewindeteil
- 38: Welle
- 40: Zapfen
- 42: Hülsenteil
- 44: distales Ende
- 46: Feder
- 48: Schmutzschutz
- 50: Rückschlussstreifen
- 50a: Rückschlussstreifen mit planarem Querschnitt
- 50b: Rückschlussstreifen mit bogenförmigen Querschnitt
- 52: Rückschlussstreifen
- 54: Bohrung
- 56: Krümmer, Gegenkomponente
- 58: elektrischer Verbinder
- 60: Nut
- 62: Dichtung
- 64: Flansch, integraler Kunststoffbefestigungsflansch, Befestigungsflansch
- 66: Flansch, integraler Kunststoffbefestigungsflansch, Befestigungsflansch
- 68: Durchgangsloch
- 70: Durchgangsloch
- 72: Befestigungselement, Schraube
- 74: Befestigungselement, Schraube
- 76: Befestigungsloch
- 78: Befestigungsloch
- 80: elektrische Leitung
- 110: Motor
- 154: Bohrung
- 156: Krümmer, Gegenkomponente
- 158: elektrischer Verbinder
- 160: Nut
- 162: O-Ring-Dichtung, Dichtung zwischen Gehäuse 180 und Verbinder 158
- 180: Gehäuse, Motorgehäuse, Nichteisenmotorgehäuse
- 182: Absatz
- 184: O-Ring-Dichtung, Dichtung zwischen Gehäuse 180 und Krümmer 156
- 186: Absatz
- 188: Halter
- 190: Bohrung
- 192: Nase, Federnase
- 194: Nase, Federnase

## Patentansprüche

1. Magnetvorrichtung (10), die umfasst:
- eine Statoranordnung (12) gebildet durch mindestens ein Paar in axialem Abstand zueinander angeordneten Polplatten (14a, 14b; 14c 14d), zwischen denen ein Rückflussstreifen (50, 52) zur Bildung eines magnetischen Rückflusses angeordnet ist;
- eine Rotoranordnung (26), die bezüglich der Statoranordnung (12) drehbar gelagert (30) ist und mit Dauermagnetwerkstoff ausgebildet ist;
- einen elektrischen Verbinder (58) mit integralen Befestigungsflanschen (64,66) zur Befestigung der Magnetvorrichtung (10) in einer Bohrung einer Gegenkomponente (56), wobei sich die Statoranordnung (12) und die Rotoranordnung (26) nur auf einer Seite des Verbinders (58) befinden,
**dadurch gekennzeichnet, dass**
der Rückflusstreifen (50, 52) zu einem zylinder geformt ist und zwischen den Polplatten (14a, 14b; 14c 14d) durch eine Presspassung gehalten ist, wobei der Mantel des Zylinders einen planaren oder bogenförmigen Querschnitt aufweist.

2. Magnetvorrichtung (10) nach Anspruch 1,
**dadurch gekennzeichnet, dass**
der elektrische Verbinder (58) eine Dichtung (62) aufweist, um gegenüber einer als Krümmer (56) ausgebildeten Gegenkomponente eine Abdichtung zu bilden.

3. Magnetvorrichtung (10, 110) nach Anspruch 2;
**dadurch gekennzeichnet, dass**
der elektrische Verbinder (58) eine Nut (60) enthält, in der die Dichtung (62) enthalten ist.

4. Magnetvorrichtung (110), die umfasst:
- eine Statoranordnung (12) gebildet durch mindestens ein Paar in axialem Abstand zueinander angeordneten Polplatten (14a, 14b; 14c 14d), zwischen denen ein Rückflussstreifen (50, 52) zur Bildung eines magnetischen Rückflusses angeordnet ist;
- eine Rotoranordnung (26), die bezüglich der Statoranordnung (12) drehbar gelagert (30) ist und mit Dauermagnetwerkstoff ausgebildet ist;
- einen elektrischen Verbinder (158) ;
- ein mit den elektrischen Verbinder (158) verbundenes Nichteisengehäuse (180), das im wesentlichen um die Stator- (12) und die Rotoranordnung (26) herum angeordnet ist und das in eine Bohrung einer Gegenkomponente (158) einsetzbar ist;
- eine Dichtung (162) zwischen dem elektrischen Verbinder (158) und dem Nichteisengehäuse (180);
**dadurch gekennzeichnet, dass**
der Rückflusstreifen (50, 52) zu einem Zylinder geformt ist und zwischen den Polplatten (14a, 14b; 14c 14d) durch eine Presspassung gehalten ist, wobei der Mantel des Zylinders einen planaren oder bogenförmigen Querschnitt aufweist.

5. Magnetvorrichtung (110) nach Anspruch 4,
**dadurch gekennzeichnet, dass**
der elektrische Verbinder (158) eine Nut (160) enthält, in der die Dichtung (62) enthalten ist.

6. Magnetvorrichtung (110) nach Anspruch 4 oder 5;
**dadurch gekennzeichnet, dass**
eine zweite Dichtung (184) vorgesehen ist, die bei in die Bohrung der Gegenkomponente eingesetztem Nichteisengehäuse (180) zwischen dem Nichteisengehäuse (180) und der Gegenkomponente (158) angeordnet ist.

## Claims

1. Magnetic device (10) which comprises:
- a stator assembly (12) formed by at least one pair of pole plates (14a, 14b; 14c, 14d) disposed at an axial distance apart from each other, between which there is disposed a flux return strip (50, 52) for forming a magnetic flux return path,
- a rotor assembly (26) which is rotatably mounted (30) relative to said stator assembly (12) and is embodied using permanent magnetic material,
- an electrical connector (58) having integral mounting flanges (64, 66) for the purpose of mounting the magnetic device (10) in a bore of a mating component (56), the stator assembly (12) and the rotor assembly (26) being located on one side of the connector (58) only,
**characterised in that**
the flux return strip (50, 52) is shaped in the form of a cylinder and is held in place between the pole plates (14a, 14b; 14c, 14d) by means of a press fit, the jacket of the cylinder having a planar or arc-shaped cross-section.

2. Magnetic device (10) according to claim 1,
**characterised in that**
the electrical connector (58) has a seal (62) in order to form a sealing engagement with respect to a mating component embodied as a manifold (56).

3. Magnetic device (10, 110) according to claim 2,
**characterised in that**
the electrical connector (58) includes a groove (60) in which said seal (62) is contained.

4. Magnetic device (110) which comprises:
- a stator assembly (12) formed by at least one pair of pole plates (14a, 14b; 14c, 14d) disposed at an axial distance apart from each other, between which there is disposed a flux return strip (50, 52) for forming a magnetic flux return path,
- a rotor assembly (26) which is rotatably mounted (30) relative to said stator assembly (12) and is embodied using permanent magnetic material,
- an electrical connector (158),
- a non-ferrous housing (180), connected to the electrical connector (158), which is essentially disposed around the stator assembly (12) and the rotor assembly (26) and which can be inserted into a bore of a mating component (158),
- a seal (162) between the electrical connector (158) and the non-ferrous housing (180),
**characterised in that**
the flux return strip (50, 52) is shaped in the form of a cylinder and is held in place between the pole plates (14a, 14b; 14c, 14d) by means of a press fit, the jacket of the cylinder having a planar or arc-shaped cross-section.

5. Magnetic device (10) according to claim 4,
**characterised in that**
the electrical connector (58) includes a groove (60) in which said seal (62) is contained.

6. Magnetic device (110) according to claim 4 or 5,
**characterised in that**
a second seal (184) is provided which is disposed between the non-ferrous housing (180) and the mating component (158) in the non-ferrous housing (180) inserted into the bore of the mating component.

## Revendications

1. Dispositif (10)à aimants, qui comprend:
- un dispositif (12) statorique formé par au moins une paire de plaques (14a, 14b, 14c, 14d) polaires disposées à distance axiale l'une de l'autre, entre lesquelles est disposée une bande (50, 52) de retour pour former un retour magnétique
- un dispositif (26) rotorique qui est monté (30) tournant par rapport au dispositif (12) statorique et qui est en un matériau d'aimant permanent
- un connecteur (58) électrique à brides (64, 66) de fixation en faisant partie intégrante, pour la fixation du dispositif (10) à aimant dans un trou d'un élément (56) antagoniste, le dispositif (12) statorique et le dispositif (26) rotorique ne se trouvant que d'un côté du connecteur (58),
**caractérisé en ce que**
la bande (50, 52) de retour est conformée en un cylindre et est maintenue entre les plaques (14a,14b, 14c, 14d)polaires par un ajustage serré, la surface latérale du cylindre ayant une section transversale plane ou arquée.

2. Dispositif (10)à aimant suivant la revendication 1,
**caractérisé en ce que**
le connecteur (58) électrique a une garniture(62) d'étanchéité, pour former une étanchéité vis à vis d'un élément antagoniste constitué sous la forme d'un coude (56).

3. Dispositif (10, 110)à aimant suivant la revendication 2,
**caractérisé en ce que**
le connecteur (58) électrique comporte une gorge (60) dans laquelle est contenue la garniture (62) d'étanchéité.

4. Dispositif (110)à aimant qui comprend:
- un dispositif (12) statorique formé par au moins une paire de plaques (14a, 14b, 14c, 14d) disposées à distance axiale l'une de l'autre, entre lesquelles est disposée une bande (50, 52) de retour pour former un retour magnétique,
- un connecteur (158) électrique,
- une enveloppe (180) en matériau non ferreux qui est reliée au connecteur (158) électrique qui est disposée sensiblement autour du dispositif (12) statorique et du dispositif (26) rotorique et qui peut être introduite dans un trou d'un élément (158) antagoniste,
- une garniture (162) d'étanchéité entre le connecteur (158) électrique et l'enveloppe (180) en matériau non ferreux,
**caractérisé en ce que**
la bande (50, 52) de retour est conformée en un cylindre et est maintenue entre les plaques (14a,14b, 14c, 14d)polaires par un ajustage serré, la surface latérale du cylindre ayant une section transversale plane ou arquée.

5. Dispositif (110)à aimant suivant la revendication 4,
**caractérisé en ce que**
le connecteur (158) électrique comporte une gorge (160) dans laquelle est contenue la garniture (62) d'étanchéité

6. Dispositif (10, 110)à aimant suivant les revendications 4 ou 5,
**caractérisé en ce que**
il est prévu une deuxième garniture (184) d'étanchéité qui, lorsque l'enveloppe (180) en matériau non ferreux est insérée dans le trou de l'élément antagoniste, est interposée entre l'enveloppe (180) en matériau non ferreux et l'élément (158) antagoniste.
